# EUROPÄISCHE PATENTSCHRIFT

(11) **EP 2 339 072 B1**
(45) Veröffentlichungstag und Bekanntmachung des Hinweises auf die Patenterteilung: **15.03.2017**
(21) Anmeldenummer: 10195458.4
(22) Anmeldetag: 16.12.2010
(51) Int. Cl.: E01H 4/02, A01B 33/02

(54) **Heckfräse für Pistenraupe**
Rear milling cutter for a snow groomer
Fraise arrière pour dameuse à neige

(30) Priorität: 18.12.2009 DE 102009060481
(43) Veröffentlichungstag der Anmeldung: 29.06.2011
(73) Patentinhaber: Kässbohrer Geländefahrzeug AG, 88471 Laupheim (DE)
(72) Erfinder: Nusser, Hans-Martin, 89231, Neu-Ulm (DE)
(74) Vertreter: Patentanwälte Ruff, Wilhelm, Beier, Dauster & Partner mbB

(56) Entgegenhaltungen:
- EP-A2- 0 143 003
- WO-A1-2008/114138
- JP-A- H01 171 401
- JP-A- H09 201 103
- JP-A- 2003 180 107
- US-A- 1 435 766

## Beschreibung

Die Erfindung betrifft eine Heckfräse mit einer angetriebenen Arbeitswellenanordnung, die in einem zu dem Boden hin offenen Bearbeitungsgehäuse drehbar gelagert ist.

Derartige Heckfräsen werden bei der Schneepistengestaltung und -pflege eingesetzt.

Eine derartige Heckfräse für ein Kettenfahrzeug zur Schneepistenbearbeitung ist allgemein bekannt, siehe z.B. WO2008/114138. Die Heckfräse ist mittels eines Anbaurahmens heckseitig an eine entsprechende Pistenraupe angebaut. Die Heckfräse wird angetrieben von einem oder mehreren Hydromotoren, die über eine fahrzeugseitige Hydraulik der Pistenraupe gespeist und gesteuert werden. Die Heckfräse weist ein Fräsengehäuse auf, in dem mehrere Fräswellen in einer Flucht nebeneinander angeordnet und drehbar gelagert sind. Das Fräsengehäuse überdeckt die Fräswellen haubenartig und ist nach unten offen. In normaler Fahrtrichtung nach hinten schließt an das Fräsengehäuse eine auch als Finisher bezeichnete Glätteinrichtung an, die ein flexibles Glättgebilde umfasst. Im Fräsbetrieb der Heckfräse nehmen die Fräswellen Schnee- und Eisbrocken auf und zerkleinern diese bei der Rotation zwischen den Messern der Fräswelle und einer Innenwandung des Fräsengehäuses. Die Innenwandung des Fräsengehäuses dient als Prallwandung, an der die Schnee- und Eisbrocken anprallen und zurückgeschleudert werden, um anschließend durch die Messer der Fräswelle erneut gegen die Innenwandung geschleudert zu werden. Hierdurch ergibt sich die gewünschte Zerkleinerung der Schnee- und Eisbrocken. Hinter der Fräswelle fallen die bearbeiteten Schnee- und Eisreste auf die Pistenoberfläche zurück und werden durch das Glättgebilde verdichtet und geglättet. Hierdurch entsteht die bearbeitete Pistenoberfläche.

Aufgabe der Erfindung ist es, eine Heckfräse der eingangs genannten Art zu schaffen, das eine variable Bodenbearbeitung ermöglicht.

Diese Aufgabe wird dadurch gelöst, dass das Bearbeitungsgehäuse wenigstens zwei Gehäusemantelabschnitte aufweist, die relativ zueinander in Umfangsrichtung - relativ zu einer Drehachse der Arbeitswellenanordnung - fächerartig beweglich gelagert sind. Durch die erfindungsgemäße Lösung ist eine nutzbare Prallwandung des Bearbeitungsgehäuses variabel zwischen einer ersten Endposition, in der das Bearbeitungsgehäuse die Arbeitswellenanordnung über einen ersten Umfangswinkel umgibt, und einer zweiten Endposition, in der der wenigstens eine erste Gehäusemantelabschnitt und der wenigstens eine zweite Gehäusemantelabschnitt einander in Umfangsrichtung ergänzen und so über einen größeren Umfangswinkel die Arbeitswellenanordnung umgeben. Die Gehäusemantelabschnitte sind vorzugsweise relativ zueinander stufenlos verstellbar. Die Arbeitswellenanordnung kann aus einer einzelnen oder mehreren, fluchtend nebeneinander angeordneten Arbeitswellen aufgebaut sein. Die einzelnen Arbeitswellen können gemeinsam oder separat angetrieben sein. Das Bearbeitungsgehäuse kann über eine Bearbeitungsbreite der Heckfräse in mehreren Gehäuseabschnitte unterteilt sein, denen vorzugsweise jeweils eine einzelne Arbeitswelle zugeordnet ist und die jeweils wenigstens einen verschiebbaren Gehäusemantelabschnitt und einen stationären Gehäusemantelabschnitt aufweisen. Es ist auch möglich, mehr als zwei Gehäusemantelabschnitte relativ zueinander in Umfangsrichtung verschiebbar vorzusehen. Durch die erfindungsgemäße Veränderbarkeit des Gehäusemantels des Fräsengehäuses ist es möglich, je nach Art der zu bearbeitenden Schneeoberfläche den Gehäusemantel größer oder kleiner einzustellen. Insbesondere bei harten und eisigen Schnee- und Eisklumpen ist eine über einen größeren Umfangsabschnitt aufgefächerte Prallwand vorteilhaft. Bei eher pulvrigen Schneebedingungen genügt ein Gehäusemantel über einen geringeren Umfangswinkel. Je nach Einsatzzweck werden somit die Gehäusemantelabschnitte in Umfangsrichtung aufgefächert oder übereinander geschoben.

Erfindungsgemäß sind wenigstens ein stationärer Gehäusemantelabschnitt und wenigstens ein beweglicher Gehäuseabschnitt vorgesehen, wobei der bewegliche Gehäuseabschnitt relativ dem stationären Gehäusemantelabschnitt - relativ zu der Drehachse der Arbeitswellenanordnung in Umfangsrichtung gesehen - derart verschiebbar gelagert ist, dass in einer Endposition die Gehäusemantelabschnitte einander in Umfangsrichtung überlagert sind, und dass in der anderen Endposition der wenigstens eine Gehäusemantelabschnitt den wenigstens einen stationären Gehäusemantelabschnitt im Wesentlichen fluchtend verlängert.

Erfindungsgemäß weist der bewegliche Gehäusemantelabschnitt eine im Querschnitt bogenförmige Wandung auf, die den stationären Gehäusemantelabschnitt in Umfangsrichtung innenseitig zumindest weitgehend überdeckt. Hierdurch wird eine Doppelwandung gebildet, in die sich die bogenförmige Wandung des verschiebbaren Gehäusemantelabschnittes innenseitig an eine Innenwandung des stationären Gehäusemantelabschnittes anschmiegt. Die bogenförmige Wandung des verschiebbaren Gehäusemantelabschnittes und die Innenwandung des stationären Gehäusemantelabschnittes definieren - je nach Verschiebestellung - die Prallwandung für Bodenpartikel, die durch die Arbeitswellenanordnung gegen die Innenseite des Bearbeitungsgehäuses geschleudert werden.

In weiterer Ausgestaltung der Erfindung schließt an das Bearbeitungsgehäuse - auf eine Bearbeitungsrichtung bezogen - rückseitig eine Glätteinrichtung zum Verdichtung des bearbeiteten Bodens an, die ein flexibles Glättgebilde aufweist, das an den beweglichen Gehäusemantelabschnitt oder an den stationären Gehäusemantelabschnitt angefügt ist. Der stationäre Gehäusemantelabschnitt verbleibt relativ zu einem Anbaurahmen der Pistenraupe insoweit ortsfest, als er durch die Pistenraupe gezogen wird. Der verschiebbare Gehäusemantelabschnitt ist relativ zu dem stationären Gehäusemantelabschnitt beweglich angeordnet. Der stationäre Gehäusemantelabschnitt kann grundsätzlich jedoch gemeinsam mit dem gesamten Fräsengehäuse in verschiedene Positionen relativ zur Pistenraupe verstellt werden, wie dies grundsätzlich für Heckfräsen von Pistenraupen bekannt ist. Durch die Glätteinrichtung wird der durch die Arbeitswellenanordnung und das Bearbeitungsgehäuse bearbeitete Boden verdichtet und geglättet. Diese Ausgestaltung ist besonders vorteilhaft bei einer Heckfräse für eine Pistenraupe einsetzbar, da die Glätteinrichtung das Pistenbild der bearbeiteten Schneepistenoberfläche formt. Die zuvor durch die Heckfräse stark verkleinerten Schnee- und Eisreste werden verdichtet und zu einer durch Skifahrer oder Snowboarder gut zu befahrenden Schneepiste geglättet.

In weiterer Ausgestaltung der Erfindung sind Antriebsmittel vorgesehen, um den wenigstens einen beweglichen Gehäusemantelabschnitt in unterschiedliche Positionen zu verstellen und in den jeweils eingestellten Positionen zu sichern. Vorzugsweise umfassen die Antriebsmittel wenigstens einen Hydraulikzylinder, der an dem verschiebbaren Gehäusemantelabschnitt angreift.

In weiterer Ausgestaltung der Erfindung ist die bodenförmige Wandung als schlagfestes, insbesondere schalldämmendes und zumindest weitgehend formstabiles Flächengebilde, insbesondere aus Kunststoff, gestaltet. Das Flächengebilde kann ein- oder mehrlagig ausgeführt sein. Vorzugsweise ist eine zur Arbeitswellenanordnung gerichtete Oberfläche des Flächengebildes glattflächig, um ein Anhaften von Boden- oder Schmutzpartikeln zumindest weitgehend zu vermeiden.

In weiterer Ausgestaltung der Erfindung ist die Wandung an einem Trägerprofil gehalten, von dem die Wandung frei abragt, und das mittels Führungsanordnungen außenseitig an dem wenigstens einen stationären Gehäusemantelabschnitt verschiebbar geführt ist. Das Trägerprofil erstreckt sich vorzugsweise über die Arbeitsbreite des Arbeitsgehäuses bzw. über eine Arbeitsbreite eines entsprechenden Gehäuseabschnittes.

In weiterer Ausgestaltung der Erfindung ist das Trägerprofil benachbart zu einem Längsseitenrand des stationären Gehäusemantelabschnittes angeordnet. Der Längsseitenrand bildet vorzugsweise eine - in normaler Bearbeitungsrichtung gesehen - rückseitige Begrenzung, die sich über die Arbeitsbreite des Arbeitsgehäuses erstreckt.

In weiterer Ausgestaltung der Erfindung weisen die Führungsanordnungen bogenförmige Führungskufen auf, die in Führungsprofilierungen am Außenumfang des wenigstens einen stationären Gehäusemantelabschnittes verschiebbar geführt sind. Dadurch ist eine sichere Führung und Lagerung des verschiebbaren Gehäusemantelabschnittes ermöglicht.

In weiterer Ausgestaltung der Erfindung weisen die Führungskufen Gleitflächenabschnitte mit reduziertem Gleitreibungskoeffizienten auf. Dadurch ist eine besonders leichtgängige Verstellung des verschiebbaren Gehäusemantelabschnittes relativ zu dem stationären Gehäusemantelabschnitt erzielbar.

In weiterer Ausgestaltung der Erfindung sind an gegenüberliegenden stirnseitigen Gehäuseabschlüssen des Bearbeitungsgehäuses bogenförmige Führungsstege vorgesehen, die gegenüberliegende Seitenränder der bogenförmigen Wandung führen. Diese Ausgestaltung gewährleistet, dass die Wandung des verschiebbaren Gehäusemantelabschnittes auch an ihren gegenüberliegenden Stirnseiten sicher geführt ist, um eine an die Innenwandung des stationären Gehäusemantelabschnittes angeschmiegte Verschiebbarkeit zu gewährleisten. Die Führung der bogenförmigen Wandung über die stirnseitigen Führungsstege reduziert die Gefahr, dass Bodenpartikel, insbesondere Schnee- oder Eisbrocken, sich zwischen die bogenförmige Wandung und die Innenwandung des stationären Gehäusemantelabschnittes drücken.

In weiterer Ausgestaltung der Erfindung ist ein von dem Trägerprofil abliegender Flächenbereich der Wandung über Sicherungsmittel mit den Führungskufen verbunden, wobei die Sicherungsmittel durch Längsschlitze im stationären Gehäusemantelabschnitt hindurchragen. Die innenseitige, bogenförmige Wandung wird somit in ihrem frei abragendem Flächenbereich - vorzugsweise über die Arbeitsbreite des Bearbeitungsgehäuses verteilt - mit den außen laufenden Führungskufen verbunden, indem entsprechende Sicherungsmittel durch Längsschlitze im stationären Gehäusemantelabschnitt hindurchragen. Diese Längsschlitze definieren zwangsläufig auch den maximalen Verstellwinkel der Wandung. Die Längsschlitze sind in Umfangsrichtung erstreckt und parallel zueinander über die Breite des stationären Gehäusemantelabschnittes verteilt angeordnet. Die Anzahl der Längsschlitze entspricht vorzugsweise der Anzahl der Führungskufen, die das Trägerprofil und damit die Wandung halten.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Figur 1: zeigt in geschnittener Seitenansicht eine erste Ausführungsform einer erfindungsgemäßen Heckfräse für eine Pistenraupe,
- Figur 2: die Heckfräse nach Figur 1 mit verstelltem Gehäusemantel,
- Figur 3: eine weitere Ausführungsform einer erfindungsgemäßen Heckfräse ähnlich Figur 1, bei der ein Finisher an einem verstellbaren Gehäusemantelabschnitt angelenkt ist,
- Figur 4: die Heckfräse nach Figur 3 mit verstelltem Gehäusemantel,
- Figur 5: in perspektivischer Darstellung einen Teil der Heckfräse nach den Figuren 3 und 4,
- Figur 6: eine weitere perspektivische Darstellung eines Teils der Heckfräse nach den Figuren 3 bis 5,
- Figur 7: schematisch eine Längsschnittdarstellung der Heckfräse nach den Figuren 3 bis 6 in einer oberen Endposition des verschiebbaren Gehäusemantelabschnittes,
- Figur 8: die Heckfräse nach Figur 7, bei der der verschiebbare Gehäusemantelabschnitt in seiner unteren Endposition positioniert ist,
- Figur 9: in verkleinerter Darstellung einen weiteren Schnitt durch die Heckfräse nach den Figuren 3 bis 6 ähnlich den Figuren 7 und 8, allerdings unter Weglassen mehrerer Teile der Heckfräse,
- Figur 10: eine Ansicht von unten des stationären Gehäusemantelabschnittes des Fräsengehäuses nach den Figuren 3 bis 9,
- Figur 11: in vergrößerter, perspektivischer Darstellung den verschiebbaren Gehäusemantelabschnitt mit seiner bogenförmigen Wandung und mehreren Führungskufen und
- Figur 12: in vergrößerter Darstellung einen Querschnitt durch einen Teilbereich des verschiebbaren Gehäusemantelabschnittes nach Figur 11 auf Höhe einer Führungskufe.

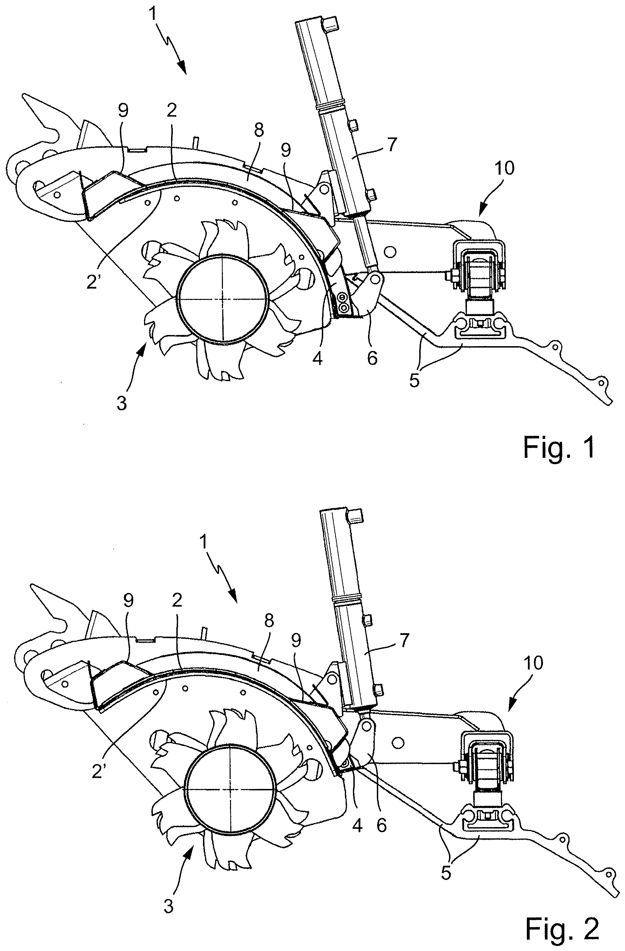

Eine Heckfräse 1, 1 a nach den Fig. 1 bis 12 ist als Heckanbaugerät an einer Pistenraupe vorgesehen, die in grundsätzlich bekannter Weise zur Schneepistengestaltung und - pflege vorgesehen ist. Die Heckfräse 1, 1 a ist an einer Heckträgeranordnung der Pistenraupe lösbar befestigbar. Alle hydraulischen Antriebsmittel der Heckfräse 1, 1 a werden durch eine Fahrzeughydraulik der Pistenraupe gespeist und vom Fahrzeug aus gesteuert. Die Heckfräse 1, 1 a dient dazu, die durch ein linkes und ein rechtes Kettenlaufwerk der Pistenraupe aufgewühlte und klumpige Schneepistenoberfläche aufzubrechen, zu zerkleinern und zu glätten. Hierzu weist die Heckfräse eine Glätteinrichtung 5, 10; 5, 10a auf, die - in normaler Bearbeitungs- und Fahrtrichtung der Pistenraupe gesehen - heckseitig an ein Fräsengehäuse 2, 2a der Heckfräse 1, 1 a anschließt. Bei den dargestellten Ausführungsformen weist die Heckfräse 1, 1 a ein Fräsengehäuse auf, das aus zwei Gehäuseabschnitten gebildet ist, die sich jeweils über eine Hälfte der Arbeitsbreite der Heckfräse 1, 1 a erstrecken. In jedem Gehäuseabschnitt ist jeweils eine Fräswelle 3, 3a drehbar gelagert und hydromotorisch angetrieben. Die Fräswelle 3, 3a erstreckt sich im Wesentlichen über eine Arbeitsbreite des zugehörigen Gehäuseabschnittes. Die beiden nebeneinander angeordneten Gehäuseabschnitte des Fräsengehäuses 2, 2a sind im Betriebszustand miteinander starr gekoppelt. Vorzugsweise ist zwischen den beiden Gehäuseabschnitten ein entsprechender Hydroantrieb vorgesehen, um die beiden sich von der Mitte ausgehend zu gegenüberliegenden Seiten erstreckenden Fräswellen 3, 3a anzutreiben.

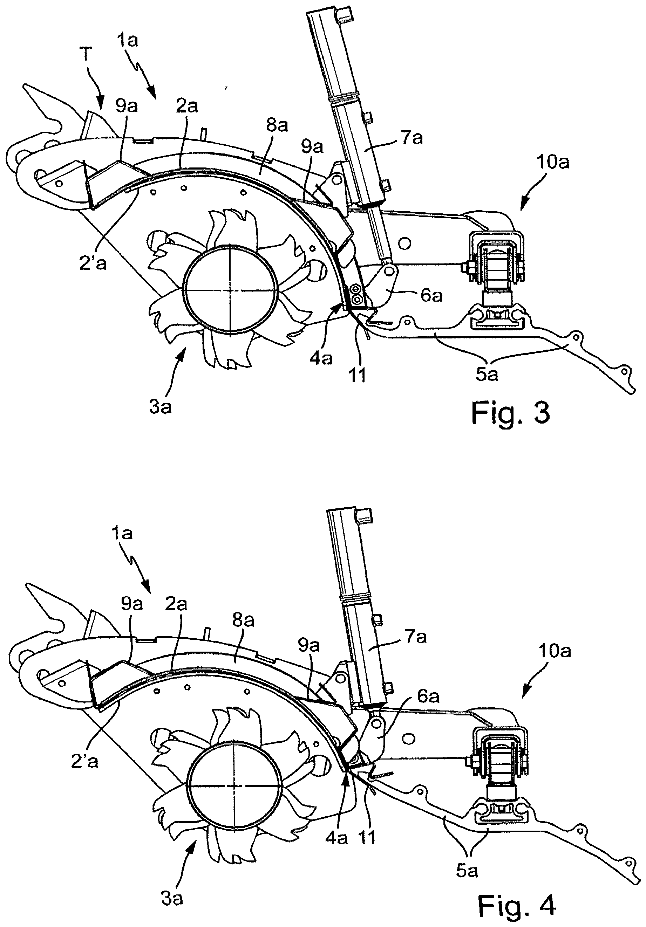

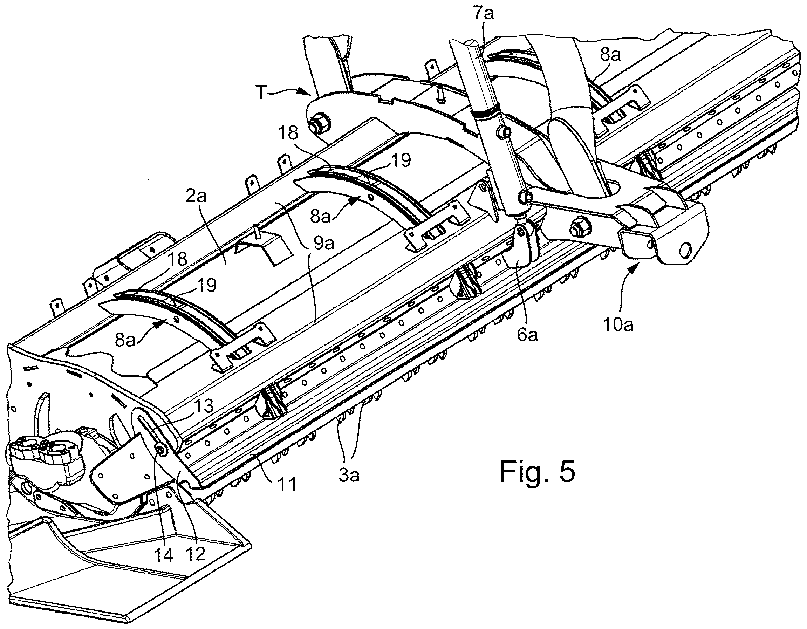

Die Glätteinrichtung weist bei beiden Ausführungsformen gemäß den Fig. 1 und 2 bzw. gemäß den Fig. 3 bis 12 ein flexibles Glättgebilde in Form einer Finisheranordnung 5, 5a auf, die über mehrere, mit einem Rahmen des Fräsengehäuses 2, 2a verbundene Trägeranordnungen 10, 10a von oben her mit Druck beaufschlagbar sind. Vorzugsweise erstreckt sich ein Heckfinisher der Finisheranordnung 5, 5a über eine gesamte Arbeitsbreite des Fräsengehäuses 2, 2a und damit einteilig und durchgängig auch über die miteinander gekoppelten Gehäuseabschnitte des Fräsengehäuses hinweg. Die Finisheranordnung weist zudem nicht näher bezeichnete Seitenfinisher auf, von denen ein linker Seitenfinisher in Fig. 5 erkennbar ist. Einziger Unterschied zwischen den beiden Ausführungsformen, wie sie anhand der Fig. 1 und 2 und anhand der Fig. 3 und 4 dargestellt sind, ist es, dass bei der Ausführungsform nach den Fig. 1 und 2 der Heckfinisher an einem stationären Gehäusemantelabschnitt 2 des Fräsengehäuses angreift. Bei der Ausführungsform nach den Fig. 3 und 4 hingegen schließt der Heckfinisher der Finisheranordnung 5a an einen verschiebbaren Gehäusemantelabschnitt 2'a des Gehäuseabschnittes des Fräsengehäuses an. Hierzu weist der verschiebbare Gehäusemantelabschnitt 2'a ein schwalbenschwanzartig gestaltetes Trägerprofil 4a, 11 auf, in dem ein vorderes Stirnende des Heckfinishers formschlüssig gehalten ist.

Im Übrigen sind die beiden Heckfräsen gemäß den beiden Ausführungsformen nach den Fig. 1 und 2 bzw. 3 und 4 identisch zueinander gestaltet. Nachfolgend wird die Ausführungsform nach den Fig. 3 und 4 anhand der Fig. 5 bis 12 detailliert erläutert. Soweit die entsprechenden Erläuterungen nicht die Anbindung des Heckfinishers an das Fräsengehäuse betreffen, sind alle Ausführungen zu der Heckfräse nach den Fig. 3 bis 12 in gleicher Weise auch auf die Ausführungsform nach den Fig. 1 und 2 lesbar. Für beide Ausführungsformen wurden identische Bezugszeichen gewählt. Bei der Ausführungsform nach den Fig. 3 und 4 wurde teilweise diesen Bezugszeichen noch der Buchstabe a hinzugefügt.

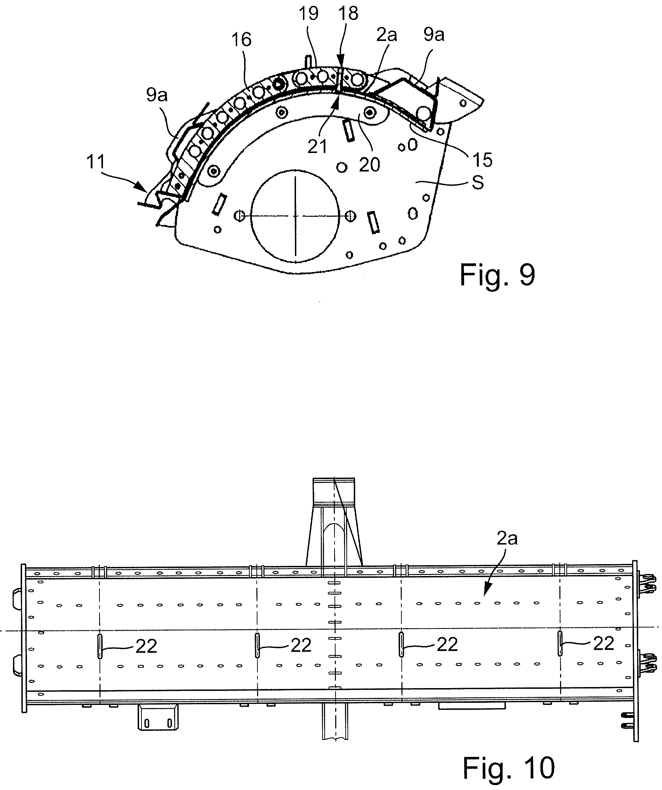

Die beiden Gehäuseabschnitte des Fräsengehäuses, die über die Arbeitsbreite des Fräsengehäuses nebeneinander angeordnet sind, sind identisch zueinander gestaltet. Nachfolgend wird daher anhand der Fig. 5 bis 12 lediglich einer der beiden Gehäusabschnitte beschrieben. Für den anderen, nicht dargestellten Gehäusabschnitt gilt das gleiche. Der Gehäusabschnitt gemäß den Fig. 3 bis 6 weist einen stationären Gehäusemantelabschnitt 2a auf, der fest mit einem Fräsenrahmen T der Heckfräse verbunden ist. Der Gehäusemantelabschnitt 2a weist an seinen gegenüberliegenden Stirnseiten stirnseitige Gehäuseabschlüsse auf, von denen einer in Fig. 9 mit S bezeichnet ist. Die stirnseitigen Gehäuseabschlüsse S dienen zur Lagerung der Fräswelle 3a. Die stirnseitigen Gehäuseabschlüsse S sind fest mit dem stationären Gehäusemantelabschnitt 2a verbunden. Der stationäre Gehäusemantelabschnitt 2a ist im Querschnitt kreisbogenartig gekrümmt. Die kreisbogenartige Krümmung erstreckt sich in Umfangsrichtung des Gehäuseabschnittes - auf eine Gehäuselängsachse bezogen, die in Fahrzeugquerrichtung erstreckt und parallel zu einer Drehachse der Fräswelle 3a ausgerichtet ist. Wie anhand der Fig. 3 und 4 erkennbar ist, ist eine Mittelachse der kreisbogenförmigen Krümmung des Gehäusemantelabschnittes 2a nicht identisch mit der Drehachse der Fräswelle 3a. Hierdurch wird ein zwischen der Fräswelle 3a und einer Innenwandung des Gehäusemantelabschnittes 2a definierter Prallraum im Uhrzeigersinn gemäß den Fig. 3 und 4 allmählich verjüngt. Bei einer sich ebenfalls im Uhrzeigersinn drehenden Fräswelle 3a wird hierdurch das Einziehen von großen Schnee- und Eisbrocken in das Fräsengehäuse erleichtert. In Umfangsrichtung erstreckt sich der kreisbogenförmige, stationäre Gehäusemantelabschnitt 2a über einen Winkel von mehr als 90° und vorzugsweise weniger als 130°.

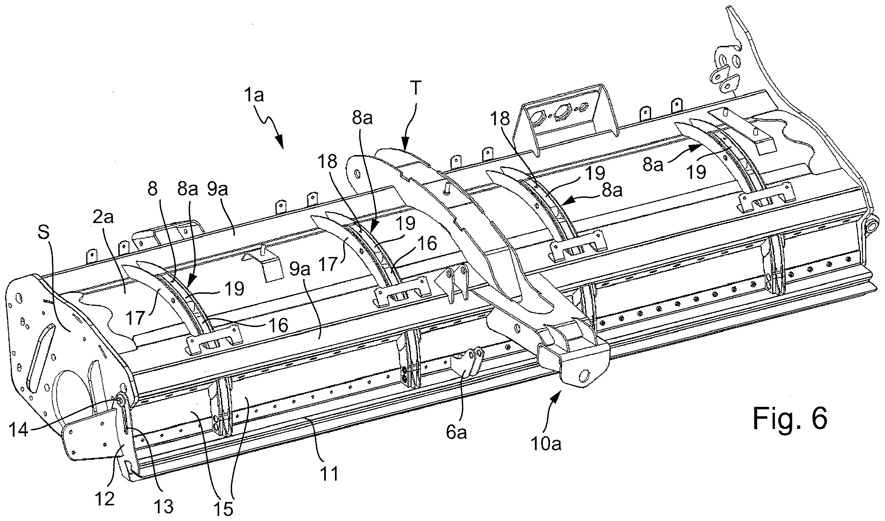

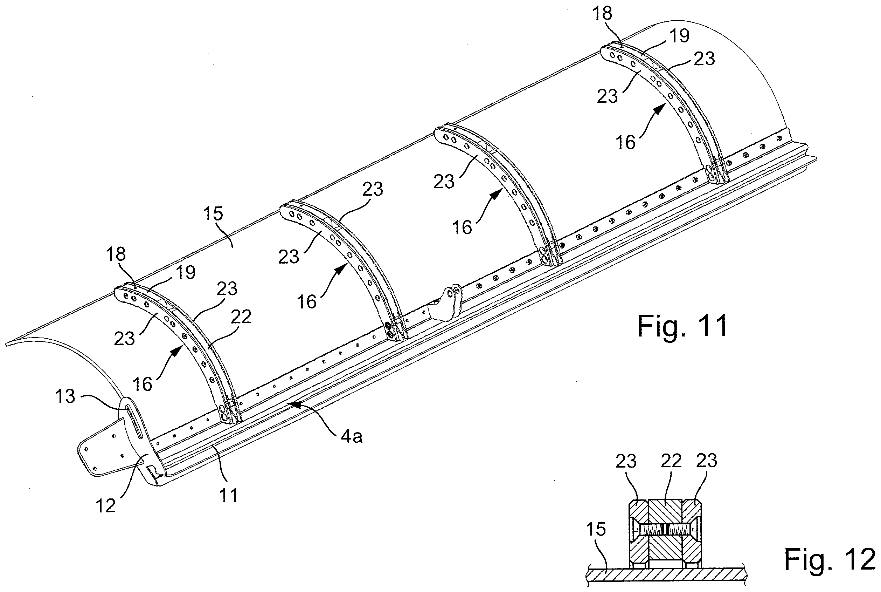

An dem stationären Gehäusemantelabschnitt 2a ist zusätzlich ein verschiebbarer Gehäusemantelabschnitt 2'a gelagert, der in Fig. 4 in einer oberen Endposition und in Fig. 3 in einer unteren Endposition dargestellt ist. In der unteren Endposition wird der Gehäusemantel des Fräsengehäuses durch diesen zusätzlichen, verschiebbaren Gehäusemantelabschnitt 2'a um etwa 20° in Umfangsrichtung verlängert. Die Verlängerung durch den verschiebbaren Gehäusemantelabschnitt 2'a erfolgt rückseitig am Fräsengehäuse, d.h. auf der der Glätteinrichtung zugewandten Seite des Fräsengehäuses. Der verschiebbare und demzufolge bewegliche Gehäusemantelabschnitt 2'a weist ein formstabiles Trägerprofil aus Metall, vorzugsweise aus Stahl auf, das sich über eine gesamte Arbeitsbreite des dargestellten Gehäuseabschnittes des Fräsengehäuses erstreckt. Das Trägerprofil 4 weist eine schwalbenschwanzartige Profilaufnahme 11 auf, in der - wie bereits beschrieben - ein vorderer Stirnrand des Heckfinishers formschlüssig gehalten ist. Das Trägerprofil 4a erstreckt sich parallel zu einem rückseitigen Längsrand des stationären Gehäusemantelabschnittes 2a und ist im Wesentlichen in fluchtender Verlängerung zu dem stationären Gehäusemantelabschnitt 2a angeordnet. Der stationäre Gehäusemantelabschnitt 2a weist ein rückseitiges und ein frontseitiges Versteifungsprofil 9a auf, das sich ebenfalls über die gesamte Arbeitsbreite des stationären Gehäusemantelabschnittes 2a erstreckt wie auch das Trägerprofil 4a. Die Versteifungsprofile 9a und der stationäre Gehäusemantelabschnitt 2a sind aus Metall gestaltet. Das Trägerprofil 4a wird mittels mehrerer Führungsanordnungen 8a fächerartig verschiebbar an dem stationären Gehäusemantelabschnitt 2a gehalten. Die Führungsanordnungen 8a werden zum einen gebildet durch am Außenumfang des Gehäusemantelabschnittes 2a befestigte Führungsprofilierungen 17, die sich schienenartig in Umfangsrichtung über den Gehäusemantelabschnitt 2a erstrecken (Fig. 6). Diese Führungsprofilierungen 17 bilden Führungsnuten für Führungskufen 16, die von dem Trägerprofil 4a aus kreisbogenförmig parallel zueinander in Umfangsrichtung nach vorne und nach oben abragen (Fig. 11). Die Führungskufen 16 gehören ebenfalls zu den Führungsanordnungen 8a und weisen Kernabschnitte 19 und 22 aus Metall auf, wobei die unteren Kernabschnitte 22 an dem Trägerprofil 4a befestigt sind. Jeder Kernabschnitt 22, 19 einer Führungskufe wird beidseitig flankiert von Gleitkufenabschnitten 23 aus einem Kunststoffmaterial mit geringem Gleitreibungskoeffizienten. Diese dienen dazu, die Verschiebbarkeit der Führungskufen 16 in den Führungsprofilierungen 17 zu erleichtern.

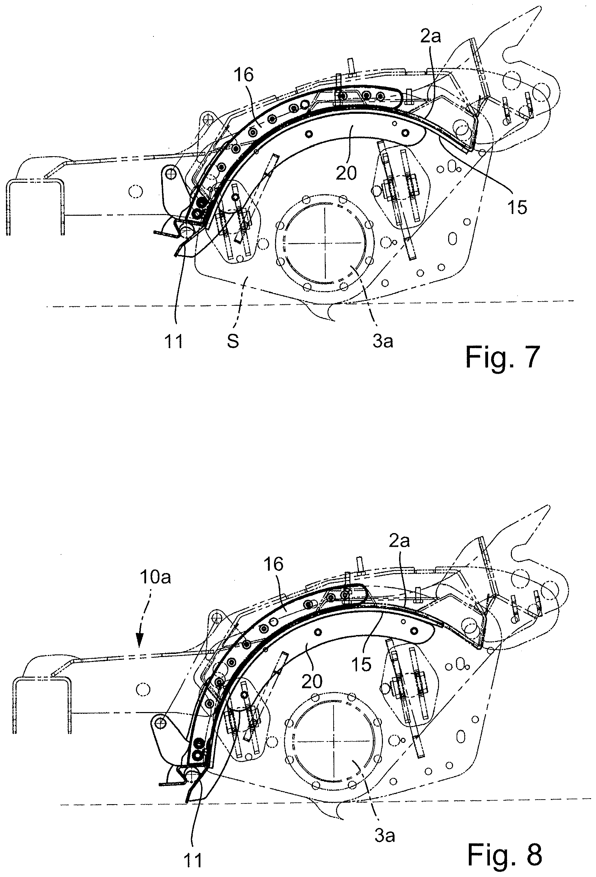

Von dem Trägerprofil 4a ragt eine im Querschnitt kreisbogenförmige und demzufolge schalenförmige Wandung 15 schräg nach oben und nach vorne ab, die gleichmäßig im Abstand radial innerhalb der Führungskufen 16 angeordnet ist. Die Wandung 15 ist im montierten Zustand innerhalb des Fräsengehäuses innenseitig an eine Innenwandung des stationären Gehäusemantelabschnittes 2a angeschmiegt (Fig. 7 bis 9). An den gegenüberliegenden, stirnseitigen Gehäuseabschlüssen S des stationären Gehäusemantelabschnittes sind kreisbogenförmige Führungsstege 20 befestigt (Fig. 7 bis 9), die in geringem, parallelem Abstand zu der Innenwandung des stationären Gehäusemantelabschnittes 2a angeordnet sind. Der Abstand der Führungsstege 20 zur Gehäuseinnenwandung des stationären Gehäusemantelabschnittes 2a ist so gewählt, dass die schalenförmige Wandung 15 mit ihren gegenüberliegenden Seitenrandbereichen in einem zwischen den Führungsstegen 20 und der Gehäuseinnenwandung definierten Führungsspalt geführt ist. Dadurch ist eine sichere Führung der gegenüberliegenden Seitenränder der Wandung 15 erreicht. Das Trägerprofil 4a weist zudem eine Seitenwange 12 auf, die mittels einer kreisbogenförmigen Kulissenführung 13 außenseitig an dem stirnseitigen Gehäuseabschluss S (Fig. 6) des stationären Gehäusemantelabschnittes geführt ist. Hierzu ist am stirnseitigen Gehäuseabschluss S ein kulissensteinartiger Führungszapfen 14 befestigt.

Um über die gesamte Arbeitsbreite des Gehäuseabschnittes ein sicheres Anschmiegen der Wandung 15 an die Innenwandung des stationären Gehäusemantelabschnittes 2a zu ermöglichen, sind, wie anhand der Fig. 10 erkennbar ist, in der Prallwandung des Gehäusemantelabschnittes 2a insgesamt vier Längsschlitze 22 vorgesehen, die den Gehäusemantelabschnitt von innen nach außen durchdringen. Durch die Längsschlitze 22 ragt jeweils ein schrauben- oder stiftförmiges Sicherungselement 21 hindurch, das die Wandung 15 von einer Innenseite her durchdringt und in einer Aufnahmebohrung 18 des Kernelementes 19 befestigt ist. Vorzugsweise ist das Sicherungselement 21 als mit einem Schraubenkopf versehene Schraube gestaltet und die Aufnahmebohrung 18 ist als korrespondierende Gewindebohrung ausgeführt. Dadurch ist es möglich, die Wandung 15 in ihrem vom Trägerprofil 4a entfernten Flächenbereich gegen die Innenwandung des stationären Gehäusemantelabschnittes anliegend zu halten. Die Länge des Längsschlitzes 22 entspricht vorzugsweise der Länge der Kulissenführung 13. Die Längsschlitze 22 und die Kulissenführung 13 begrenzen somit den Verschiebeweg des beweglichen Gehäusemantelabschnittes 2'a einschließlich seiner Wandung 15, seines Trägerprofiles 4a und seiner Führungskufen 16. Die Sicherung der Wandung 15 von einer Innenseite her an den entsprechenden Führungskufen 16 gewährleistet gleichzeitig auch, dass die Führungskufen 16 nicht von den Führungsprofilierungen 17 des stationären Gehäusemantelabschnittes abheben können.

Die Wandung 15 besteht aus Kunststoff, der vorzugsweise eine Geräuschdämmungsfunktion aufweisen kann. Anhand der Fig. 7 und 8 ist erkennbar, dass die Wandung 15 in einer oberen Endposition des beweglichen Gehäusemantelabschnittes 2'a eine Innenwandung des stationären Gehäusemantelabschnittes 2a vollständig überlappt. In einer unteren Endposition (Fig. 8) hingegen ist die Wandung 15 gegenüber der Innenwandung des stationären Gehäusemantelabschnittes 2a fächerartig nach unten verlagert, wodurch sich die für die Fräsewelle nutzbare Gehäusewandung um den entsprechend verschobenen Winkelbetrag vergrößert statt einer Prallwandung über einen Umfang von vorzugsweise etwa 110° wird somit eine Prallwandung über einen Umfang von etwa 130° erzeugt.

Eine Verlagerung des beweglichen Gehäusemantelabschnittes 2'a und damit der Wandung 15 erfolgt durch Antriebsmittel, die gemäß der Darstellung nach den Fig. 3 bis 5 einen Hydraulikzylinder 7a umfassen. Die Steuerung erfolgt vorzugsweise von der Pistenraupe aus. Je nach der Arbeitsbreite des Fräsengehäuses bzw. eines entsprechenden Gehäuseabschnittes können ein oder mehrere Hydraulikzylinder 7a über die Arbeitsbreite verteilt angeordnet sein.

## Patentansprüche

1. Heckfräse für eine Pistenraupe zur Schneepistengestaltung und -pflege mit einem zu dem Boden hin offenen Bearbeitungsgehäuse und mit einer angetriebenen Arbeitswellenanordnung, die in dem Bearbeitungsgehäuse drehbar gelagert ist, **dadurch gekennzeichnet, dass** das Bearbeitungsgehäuse einen stationären Gehäusemantelabschnitt (2, 2a) und einen beweglichen Gehäusemantelabschnitt (2'; 2'a) aufweist, die relativ zueinander in Umfangsrichtung - relativ zu einer Drehachse der Arbeitswellenanordnung (3a) - fächerartig beweglich gelagert sind, und dass der bewegliche Gehäusemantelabschnitt (2'a) eine im Querschnitt bogenförmige Wandung (15) aufweist, die den stationären Gehäusemantelabschnitt (2a) im Umfangsrichtung innenseitig zumindest weitgehend überdeckt, und sich an eine Innenwandung des stationären Gehäusemantelabschnittes (2a) anschmiegt.

2. Heckfräse nach Anspruch 1, **dadurch gekennzeichnet, dass** der bewegliche Gehäusemantelabschnitt (2', 2'a) relativ zu dem stationären Gehäusemantelabschnitt (2, 2a) - relativ zu der Drehachse der Arbeitswellenanordnung (3a) in Umfangsrichtung gesehen - derart verschiebbar gelagert ist, dass in einer Endposition die Gehäusemantelabschnitte (2, 2'; 2a, 2'a) einander in Umfangsrichtung überlagert sind, und dass in der anderen Endposition der verschiebbare Gehäusemantelabschnitt (2', 2'a) den stationären Gehäusemantelabschnitt (2, 2a) im Wesentlichen fluchtend verlängert.

3. Heckfräse nach Anspruch 1 oder 2, **dadurch gekennzeichnet, dass** an das Bearbeitungsgehäuse - auf eine Bearbeitungsrichtung bezogen - rückseitig eine Glätteinrichtung (5, 10; 5a, 10a) anschließt, die ein flexibles Glättgebilde (5, 5a) aufweist, das an den beweglichen Gehäusemantelabschnitt (2', 2'a) oder an den stationären Gehäusemantelabschnitt (2, 2a) angefügt ist.

4. Heckfräse nach Anspruch 1, 2 oder 3, **dadurch gekennzeichnet, dass** Antriebsmittel (7a) vorgesehen sind, um den beweglichen Gehäusemantelabschnitt (2', 2'a) in unterschiedliche Positionen zu verstellen und in den jeweils eingestellten Positionen zu sichern.

5. Heckfräse nach Anspruch 1, **dadurch gekennzeichnet, dass** die bogenförmige Wandung (15) als schlagfestes, insbesondere schalldämmendes und zumindest weitgehend formstabiles Flächengebilde, insbesondere aus Kunststoff, gestaltet ist.

6. Heckfräse nach Anspruch 1 oder 5, **dadurch gekennzeichnet, dass** die Wandung (15) an einem Trägerprofil (4a) gehalten ist, von dem die Wandung (15) frei abragt, und das mittels Führungsanordnungen (8a) außenseitig an dem stationären Gehäusemantelabschnitt (2a) verschiebbar geführt ist.

7. Heckfräse nach Anspruch 6, **dadurch gekennzeichnet, dass** das Trägerprofil (4a) benachbart zu einem Längsseitenrand des stationären Gehäusemantelabschnitts (2a) angeordnet ist.

8. Heckfräse nach Anspruch 6, **dadurch gekennzeichnet, dass** die Führungsanordnungen (8a) bogenförmige Führungskufen (16) aufweisen, die in Führungsprofilierungen (17) am Außenumfang des wenigstens einen stationären Gehäusemantelabschnittes (2a) verschiebbar geführt sind.

9. Heckfräse nach Anspruch 8, **dadurch gekennzeichnet, dass** die Führungskufen (16) Gleitflächenabschnitte (23) mit reduziertem Gleitreibungskoeffizienten aufweisen.

10. Heckfräse nach wenigstens einem der vorhergehenden Ansprüche, **dadurch gekennzeichnet, dass** an gegenüberliegenden stirnseitigen Gehäuseabschlüssen (S) des Bearbeitungsgehäuses bogenförmige Führungsstege (20) vorgesehen sind, die gegenüberliegende Seitenränder der bogenförmigen Wandung (15) führen.

11. Heckfräse nach wenigstens einem der vorhergehenden Ansprüche 8-10, **dadurch gekennzeichnet, dass** ein von dem Trägerprofil (4a) abliegender Flächenbereich der Wandung (15) über Sicherungsmittel (21) mit den Führungskufen (16) verbunden ist, wobei die Sicherungsmittel durch Längsschlitze (22) im stationären Gehäusemantelabschnitt (2a) hindurchragen.

## Claims

1. Rear tiller for a tracked piste grooming vehicle for snow piste shaping and grooming, having a preparation housing that is open towards the ground and having a driven working shaft arrangement, which is rotatably mounted in the preparation housing, **characterized in that** the preparation housing has a stationary housing envelope portion (2, 2a) and a movable housing envelope portion (2'; 2'a), which are mounted so as to be movable in a fan-like manner relative to one another in the circumferential direction - relative to a rotational axis of the working shaft arrangement (3a), and **in that** the movable housing envelope portion (2'a) has a wall (15) that is arcuate in cross-section and that overlaps the stationary housing envelope portion (2a) on the inside in the circumferential direction, at least to a large extent, and fits to an interior wall of the stationary housing envelope portion (2a).

2. Rear tiller according to Claim 1, **characterized in that** the movable housing envelope portion (2', 2'a) is mounted so as to be displaceable relative to the stationary housing envelope portion (2, 2a) - relative to the rotational axis of the working shaft arrangement (3a) as viewed in the circumferential direction - in such a way that, in one end position, the housing envelope portions (2, 2'; 2a, 2'a) overlap one another in the circumferential direction and that, in the other end position, the displaceable housing envelope portion (2', 2'a) extends the stationary housing envelope portion (2, 2a) in a substantially aligned manner.

3. Rear tiller according to Claim 1 or 2, **characterized in that** the preparation housing is adjoined on the back side - relative to a preparation direction - by a smoothing device (5, 10; 5a, 10a), which has a flexible smoothing structure (5, 5a) that is attached to the movable housing envelope portion (2', 2'a) or to the stationary housing envelope portion (2, 2a).

4. Rear tiller according to Claim 1, 2 or 3, **characterized in that** drive means (7a) are provided in order to adjust the movable housing envelope portion (2', 2'a) into differing positions and to secure it in the respectively set positions.

5. Rear tiller according to Claim 1, **characterized in that** the arcuate wall (15) is in the form of an impact-resistant, in particular noise-damping and at least largely dimensionally stable surface structure, in particular made of synthetic material.

6. Rear tiller according to Claim 1 or 5, **characterized in that** the wall (15) is held at a carrier profile (4a), from which the wall (15) projects away freely, and which is displaceably guided on the outside of the stationary housing envelope portion (2a) by means of guide arrangements (8a).

7. Rear tiller according to Claim 6, **characterized in that** the carrier profile (4a) is disposed adjacently to a longitudinal lateral edge of the stationary housing envelope portion (2a).

8. Rear tiller according to Claim 6, **characterized in that** the guide arrangements (8a) have arcuate guide runners (16), which are displaceably guided in guide profilings (17) on the outer circumference of the at least one stationary housing envelope portion (2a).

9. Rear tiller according to Claim 8, **characterized in that** the guide runners (16) have sliding surface portions (23) having a reduced coefficient of sliding friction.

10. Rear tiller according to at least one of the preceding claims, **characterized in that** arcuate guide webs (20), which guide opposing lateral edges of the arcuate wall (15), are provided at opposing outside-face housing closures (S) of the preparation housing.

11. Rear tiller according to at least one of the preceding claims 8 to 10, **characterized in that** a surface region of the wall (15) that is at a distance from the carrier profile (4a) is connected to the guide runners (16) via securing means (21), the securing means projecting through longitudinal slots (22) in the stationary housing envelope portion (2a).

## Revendications

1. Fraise arrière pour un véhicule chenillé (dameuse) pour l'aménagement et l'entretien d'une piste à neige avec un boîtier de traitement ouvert vers le sol et avec un agencement d'arbre de travail entraîné, lequel est monté de façon tournante dans le boîtier de traitement, **caractérisée en ce que** le boîtier de traitement comprend une section d'enveloppe de boîtier stationnaire (2, 2a) et une section d'enveloppe de boîtier mobile (2', 2'a), montées l'une par rapport à l'autre de façon tournante en éventail dans une direction circonférentielle - par rapport à un axe de rotation de l'agencement d'arbre de travail (3a), et **en ce que** la section d'enveloppe de boîtier mobile (2'a) présente une paroi (15) en forme d'arc en coupe transversale recouvrant la section d'enveloppe de boîtier stationnaire (2a) sur le côté intérieur dans une direction circonférentielle au moins en grande partie, et se pose contre une paroi intérieure de la section d'enveloppe de boîtier stationnaire (2a).

2. Fraise arrière selon la revendication 1, **caractérisée en ce que** la section d'enveloppe de boîtier mobile (2', 2'a) par rapport à la section d'enveloppe de boîtier stationnaire (2, 2a) - par rapport à l'axe de rotation de l'agencement d'arbre de travail (3a) vu en direction circonférentielle - est monté de façon déplaçable tellement que dans une position finale les sections d'enveloppe de boîtier (2, 2' ; 2a, 2'a) se superposent l'une l'autre dans la direction circonférentielle, et **en ce que** dans l'autre position finale la section d'enveloppe de boîtier déplaçable (2', 2'a) est un élargissement de la section d'enveloppe de boîtier stationnaire (2, 2a) essentiellement en alignement.

3. Fraise arrière selon la revendication 1 ou 2, **caractérisée en ce qu'**au boîtier de traitement se raccorde à l'arrière - par rapport à une direction de traitement - un dispositif pour lisser (5, 10 ; 5a, 10a), comprenant une formation lissant (5, 5a) flexible qui est attachée à la section d'enveloppe de boîtier mobile (2' , 2'a) ou à la section d'enveloppe de boîtier stationnaire (2, 2a).

4. Fraise arrière selon la revendication 1, 2 ou 3, **caractérisée en ce que** des moyens d'entraînement (7a) sont fournis pour ajuster la section d'enveloppe de boîtier mobile (2', 2'a) dans des positions différentes et pour la fixer dans les positions ajustées respectives.

5. Fraise arrière selon la revendication 1, **caractérisée en ce que** la paroi (15) en forme d'arc est conçue sous forme d'une structure plane résistante aux chocs, en particulier absorbant le bruit et au moins en grande partie indéformable, en particulier en matière synthétique.

6. Fraise arrière selon la revendication 1 ou 5, **caractérisée en ce que** la paroi (15) est retenue sur un profilé porteur (4a), à partir duquel la paroi (15) fait librement saillie, et ledit profilé est guidé de façon déplaçable sur l'extérieur de la section d'enveloppe de boîtier stationnaire (2a) par le biais de dispositifs de guidage (8a).

7. Fraise arrière selon la revendication 6, **caractérisée en ce que** le profilé porteur (4a) est disposé adjacent à un bord latéral longitudinal de la section d'enveloppe de boîtier stationnaire (2a).

8. Fraise arrière selon la revendication 6, **caractérisée en ce que** les dispositifs de guidage (8a) présentent des patins de guidage (16) en forme d'arc, guidés de façon déplaçable dans des profilages de guidage (17) sur la circonférence extérieure d'au moins une section d'enveloppe de boîtier stationnaire (2a).

9. Fraise arrière selon la revendication 8, **caractérisée en ce que** les patins de guidage (16) présentent sections de surface de glissement (23) avec un coefficient de friction de glissement réduit.

10. Fraise arrière selon au moins une des revendications précédentes, **caractérisée en ce que** des arêtes de guidage (20) en forme d'arc sont fournies sur des bouts de boîtier (S) frontaux opposés du boîtier de traitement pour guider des bords latéraux opposés de la paroi (15) en forme d'arc.

11. Fraise arrière selon au moins une des revendications 8 à 10 précédentes, **caractérisée en ce qu'**une partie de surface de la paroi (15) à l'écart du profilé porteur (4a) est connectée aux patins de guidage (16) par le biais de moyens de fixation (21), les moyens de fixation (21 ) passant au travers des fentes longitudinales (22) dans la section d'enveloppe de boîtier stationnaire (2a).
